Europäisches Patentamt

European Patent Office

Office européen des brevets

(19)

(11) Veröffentlichungsnummer: **0 049 473**
**B1**

(12) # EUROPÄISCHE PATENTSCHRIFT

(45) Veröffentlichungstag der Patentschrift:
04.01.84

(51) Int. Cl.³: **C 10 K 1/16, C 01 B 3/52**

(21) Anmeldenummer: **81107780.9**

(22) Anmeldetag: **30.09.81**

(54) Verfahren und Vorrichtung zum Regulieren des Ammoniakgehaltes im Waschmittel einer Gaswäsche.

(30) Priorität: **30.09.80 DE 3036936**

(43) Veröffentlichungstag der Anmeldung:
**14.04.82 Patentblatt 82/15**

(45) Bekanntmachung des Hinweises auf die Patenterteilung:
**04.01.84 Patentblatt 84/1**

(84) Benannte Vertragsstaaten:
**AT BE CH DE FR GB IT LI LU NL SE**

(56) Entgegenhaltungen:
**DE - A - 1 944 389**
**DE - A - 2 759 124**
**DE - B - 1 153 002**

(73) Patentinhaber: **Linde Aktiengesellschaft,**
**Abraham-Lincoln-Strasse 21, D-6200 Wiesbaden (DE)**

(72) Erfinder: **Karwat, Heinz, Dr., Gistlstrasse 60,**
**D-8023 Pullach (DE)**

(74) Vertreter: **Schaefer, Gerhard, Dr., Linde**
**Aktiengesellschaft Zentrale Patentabteilung,**
**D-8023 Höllriegelskreuth (DE)**

ACTORUM AG

## Verfahren und Vorrichtung zum Reglieren des Ammoniakgehaltes im Waschmittel einer Gaswäsche

Die vorliegende Erfindung betrifft ein Verfahren und eine Vorrichtung zum Regulieren des $NH_3$-Gehaltes in dem bei einem Regenerativverfahren zum Ausweichen saurer Gase aus Gasgemischen und/oder zur Verhinderung der Eisbildung vor der Wäsche verwendeten Methanol, das nach diesen Verfahrensschritten jeweils von Wasser bzw. von den im Methanol gelösten Gasbestandteilen befreit und im Kreislauf wieder zur Verhinderung der Eisbildung bzw. als Waschflüssigkeit eingesetzt wird.

Bei der Herstellung technischer Gase aus Rohgas müssen aus diesem saure Bestandteile, vor allem $CO_2$ und $H_2S$, ausgeschieden werden. Als besonders günstig hat sich dazu das Methanol-Waschverfahren erwiesen, bei welchem die sauren Bestandteile bei Temperaturen bis unter –70 °C und Drücken bis zu 80 bar mit Methanol ausgewaschen werden.

Das zu reinigende Rohgas enthält meist auch Spuren von Ammoniak, die wegen der sehr grossen Löslichkeit in Methanol in diesem angereichert werden. Eine derartige Anreicherung mit Ammoniak kann wünschenswert sein, wie z.B. aus der DE-A 27 59 123 zu entnehmen ist. Aus dieser DE-A ist ein Verfahren bekannt, bei dem einem physikalischen Waschmittel, wie z.B. Methanol, Ammoniak in geringen Mengen, nämlich 0,05 bis 0,5 Gew.%, zugegeben wird. Die Wäsche mit Ammoniakzusatz stellt eine kombinierte physikalisch-chemische Wäsche dar, die bewirkt, dass eine wesentlich geringere Menge an Waschmittel eingesetzt werden muss.

Ein derartiges Verfahren ist jedoch nur dann sinnvoll anwendbar, wenn der Ammoniakgehalt konstant gehalten werden kann, also keine übermässige Anreicherung erfolgt. Oft schreitet aber die Anreicherung von Ammoniak in Methanol so weit fort, dass sich durch die gleichzeitige Anwesenheit von Kohlendioxid Festausscheidungen von Amoniumcarbaminat, besonders in der Methanolkältefalle für die Schwefelwasserstoffraktion, bilden und/oder der Wärmehaushalt beeinträchtigt wird, was den Betrieb des Waschverfahrens erheblich stören kann.

Die Entfernung von Ammoniak aus diesen enthaltenden Flüssigkeiten mit Hilfe von Ionentauschern ist aus der DE-B 1 153 002 und der DE-A 1 944 389 allgemein bereits bekannt. In diesen Schriften ist jedoch Methanol als ammoniakhaltige Flüssigkeit nicht erwähnt und ausserdem werden vom Anmeldungsgegenstand grundsätzlich unterschiedliche Gesamtverfahrens- und Verfahrensbedingungen angesprochen.

Aufgabe der vorliegenden Erfindung ist es daher, ein Verfahren zur Verfügung zu stellen, das einen störungsfreien und zuverlässigen Ablauf eines Gesamtwaschverfahrens zum Entfernen saurer Gase aus Gasgemischen mittels Methanol gewährleistet.

Diese Aufgabe wird erfindungsgemäss dadurch gelöst, dass das Methanol zur Entfernung von Ammoniak über einen Ionentauscher geleitet wird.

Mit diesem Verfahren wird erreicht, dass Ammoniak auf einfache Weise aus dem Methanol entfernt wird. Es entfällt damit die Ausbildung von Festausscheidungen von Ammonium-Verbindungen, und der Wärmehaushalt der Wäsche wird nicht mehr durch Reaktionen des Ammoniaks mit Kohlendioxid und Schwefelwasserstoff gestört.

Wie festgestellt wurde, konnten befriedigende Ergebnisse erzielt werden, wenn die Ammoniakkonzentration im umlaufenden Methanol des Waschkreislaufs in einem Bereich von 300 bis 2000 Gew.-ppm, vorzugsweise 300 bis 500 Gew.ppm, gehalten wurde.

Mit Vorteil wird das erfindungsgemässe Verfahren so angewendet, dass nur ein Teil des insgesamt umlaufenden Methanols über einen Ionentauscher geleitet wird, wobei der Ammoniak bevorzugt, nach der Abtrennung der weiteren gelösten Gasbestandteile, vorteilhaft nach der $CO_2$- und $H_2S$-Abtrennung, oder vor der Wasserabtrennung aus dem Methanol entfernt wird.

Gemäss einer weiteren Ausgestaltung des erfindungsgemässen Verfahrens erfolgt dieAmmoniakentfernung bei Temperaturen im Bereich von 10 bis 50 °C, bevorzugt im Bereich von 20 bis 40 °C. Als Ionentauscher kann dabei mit Vorteil ein Harz vom Acrylsäuretyp verwendet werden, das bevorzugt mit Schwefelsäure regeneriert wird.

Eine Vorrichtung zur Durchführung des erfindungsgemässen Verfahrens besteht im wesentlichen aus einem Vorkühler, einer Methanolwaschsäule mindestens einer Methanolregenreriersäule und mindestens einem zur Anwärmung mindestens des durch einen Ionentauscher zur Entfernung des Ammoniak zu leitenden Methanols dienenden Wärmetauscher, in welchem das Methanol auf eine Temperatur von 10 bis 50 °C, bevorzugt 20 bis 40 °C angewärmt wird.

Die Erfindung sei im folgenden anhand einer schematischen Darstellung näher erläutert.

Bei 1 strömen 100 000 $Nm^3$/h zu reinigendes Rohgas mit einer Temperatur von ca. 30 °C und einem Druck von 70 bar in einen Vorkühler 2 ein. Das Rohgas besteht hauptsächlich aus $H_2$ und $CO_2$, enthält aber auch CO, $H_2S$ und 80 kg/h Wasser und Spuren von $NH_3$ (3 vppm). Im Vorkühler 2 wird das mit Wasser gesättigte Gas mittels aus der Wäsche über die Leitungen 34 und 35 rückkehrender Gasfraktionen, auf die noch näher eingegangen wird, auf ca. –30 °C abgekühlt. Um eine Verlegung mit Wassereis zu verhindern, werden in den Vorkühler 2 über Leitung 3 160 kg/h Methanol eingespritzt, das aus der nachfolgenden Methanolwäsche abgezogen wird. Das so vorgekühlte Rohgas gelangt über einen Abscheider 23 und Leitung 4 zur Entfernung der sauren Bestandteile $CO_2$ und $H_2S$ in eine Methanolwaschsäule 5. Dort werden im unteren Teil mit einer Methanolteilmenge Schwefelverbindungen ausgewaschen. Im mittleren Teil der Waschsäule

5 erfolgt die $CO_2$-Grobwäsche mit der Hauptmenge an Methanol und im oberen Teil die Feinreinigung. Im mittleren Teil der Waschsäule 5 wird mit teilregeneriertem, im oberen Teil mit vollständig regeneriertem Methanol gewaschen. Das gereinigte Gas strömt über Leitung 34 ab zum Vorkühler 2 und dann zur weiteren Verarbeitung.

Das mit $CO_2$ beladene Methanol wird über Leitung 6 einer Regeneriersäule 7 zugeführt und in dieser durch Strippen mit einem durch Leitung 8 zugeführten Hilfsgas von $CO_2$ befreit und gelangt wieder über Leitung 9 in die Waschsäule 5 zurück. Die dabei frei werdenden Gase $H_2$, CO und $CH_4$ sowie $CO_2$ und Strippgas werden über Kopf der Säule 7 abgeführt und strömen über Leitung 35 zum Vorkühler 2.

Das sich im Sumpf der Waschsäule ansammelnde, $H_2S$ und $CO_2$ enthaltende Methanol gelangt über Leitung 10 und die Wärmetauscher 11 und 12 in eine Regeneriersäule 13. Im Wärmetauscher 11 wird das Methanol auf etwa Umgebungstemperatur, im Wärmetauscher 12 auf etwa 65 °C angewärmt und gelangt dann über Leitung 14 in die Regeneriersäule 13. Dort wird das Methanol durch Kochen vollständig entgast und das so regenerierte Methanol vom Sumpf der Regeneriersäule 13 über Leitung 15 abgezogen und in den Wärmeaustauschern 12 auf 30 °C und 11 auf −10 °C abgekühlt. Nach weiterer Abkühlung auf etwa −40 °C im Kältemittelverdampfer 16 gelangt das Methanol auf die Waschsäule 5 zurück.

Die vom Kopf der Regeneriersäule 13 abziehende $H_2S$ und $CO_2$-Fraktion wird über Leitung 17 in den Wärmetauscher 18 geführt, in dem sie im Gegenstrom gekühlt wird. Im Kältemittelverdampfer 19 wird sie auf −40 °C gekühlt, wobei mitgeführtes Methanol auskondensiert und sich im Abscheider 20 sammelt. Diese Anordnung, bestehend aus Leitung 17, Wärmetauscher 18, Kältemittelverdampfer 19, Abscheider 20 und Leitung 21, stellt die Methanolkältefalle dar. Das Kondensat wird über Leitung 21 auf die Regeneriersäule 13 zurückgeführt. Nach Anwärmung im Gegenstrom im Austauscher 18 verlässt die $CO_2$- und $H_2S$-Fraktion die Anlage durch Leitung 22.

Das im Vorkühler 2 eingespritze und aus diesem mit Wasser beladene austretende kalte (−30 °C) Methanol gelangt in den Abscheider 23 und über Leitung 24 und nach Anwärmung auf Umgebungstemperatur in einem Gegenstromwärmeaustauscher 25 in einen Abscheider 26, wo die Hauptmenge der gelösten Gase, insbesondere $CO_2$, durch Entspannen auf 2 bar abgetrennt wird. Diese Gase werden über Leitung 27 der $CO_2$- und $H_2S$-Fraktion aus der Regeneriersäule 13 zugemischt. Das Methanol-Wasser-Gemisch gelangt über Leitung 28 in die dampfbeheizte und wassergekühlte Wasser-Methanol-Trennsäule 29. Das Wasser wird über Leitung 30 am Fuss, das Methanol über Wärmeaustauscher 25 und Leitung 31 am Kopf der Säule 29 abgezogen und zur Methanol-Regeneriersäule 13 geführt. Inertgase können die Säule 29 durch Leitung 32 verlassen.

Der im Rohgas mitgeführte Ammoniak löst sich teilweise im Einspritzmethanol der Vorkühlung 2 und gelangt mit dem Methanol über Leitung 24 in die Methanol-Wasser-Trennsäule 29, in der er durch die Sumpfheizung ausgetrieben wird und daher mit dem Methanol über Leitung 31 in den Waschkreislauf gelangt. Ein Teil des Ammoniaks bleibt jedoch weiter im Rohgas und gelangt auf diese Weise über die Waschsäule 5 mit dem Waschmethanol, in dem er sich löst, in den Waschkreislauf. Von dort gelangt ein Teil des Ammoniaks über die Regeneriersäule 13 und Leitung 17 in die Methanol-Kältefalle.

Der Ammoniak bildet dort mit dem aus dem Rohgas ausgeschiedenen $CO_2$ Ammoniumcarbaminat, das sich bei Überschreitung der Löslichkeitsgrenze im Methanol bevorzugt im Wärmeaustauscher 19 als Festausscheidung niederschlägt. Der Ammoniak muss also auf eine solche Konzentration begrenzt werden, dass die Löslichkeitsgrenze im Methanolkondensat nicht überschritten wird.

Dazu wird das Methanol erfindungsgemäss über einen methanolfesten Ionentauscher 33, vorzugsweise ein Harz vom Acryltyp, geleitet. Dieser Ionentauscher 33 arbeitet besonders wirksam bei Temperaturen zwischen 10 und 50 °C, bevorzugt zwischen 20 und 40 °C. Aus diesem Grund und weil nicht der gesamte Ammoniak aus dem Methanol entfernt werden muss, eigenen sich zum Einbau des Ionenaustauscher 33 besonders Leitung 28 und Leitung 15 (gestrichelte Darstellung).

In beiden Fällen liegt die Temperatur des mit Ammoniak verunreinigten Methanols im gewünschten Bereich, so dass über den Ionentauscher Ammoniak wirksam entfernt wird. Der Einbau an anderen Stellen ist ebenfalls möglich, z.B. im Kopfprodukt der Methanol-Wasser-Trennsäule 29 oder im Kondensatstrom der Leitung 21, wenn Möglichkeiten zum Entgasen der gelösten $CO_2$- und $H_2S$-Anteile vorgesehen werden und/oder der Methanol-(teil)-strom entsprechend temperiert wird.

Ein Liter des Harzes nimmt im gequollenen Zustand in der Praxis 2,5 g Ammoniak auf. Bei den angegebenen Werten entspricht das einen Bedarf pro Stunde von 21 Liter Ionentauscher. Dieser ist in einem Behälter mit einer Schichthöhe von 800 mm angeordnet.

Zur Regenerierung des Ionentauschers wird dieser stillgelegt und die Wäsche während der Regenerierung ohne Ammoniakentfernung betrieben, was möglich ist, da der Ammoniak nicht gänzlich aus dem Methanol entfernt zu werden braucht. Alternativ können aber auch zwei Ionentauscher so betrieben werden, dass der eine regeneriert, während der andere beladen wird. Für die Regenerierung des Ionentauschers wird von unten Wasser nachgefüllt und anschliessend, eine Stunde lang, beispielsweise 5%ige Schwefelsäure eingeleitet. Danach wird nochmals mit Wasser gespült, bis praktisch kein Sulfat mehr im Ablauf vorhanden ist.

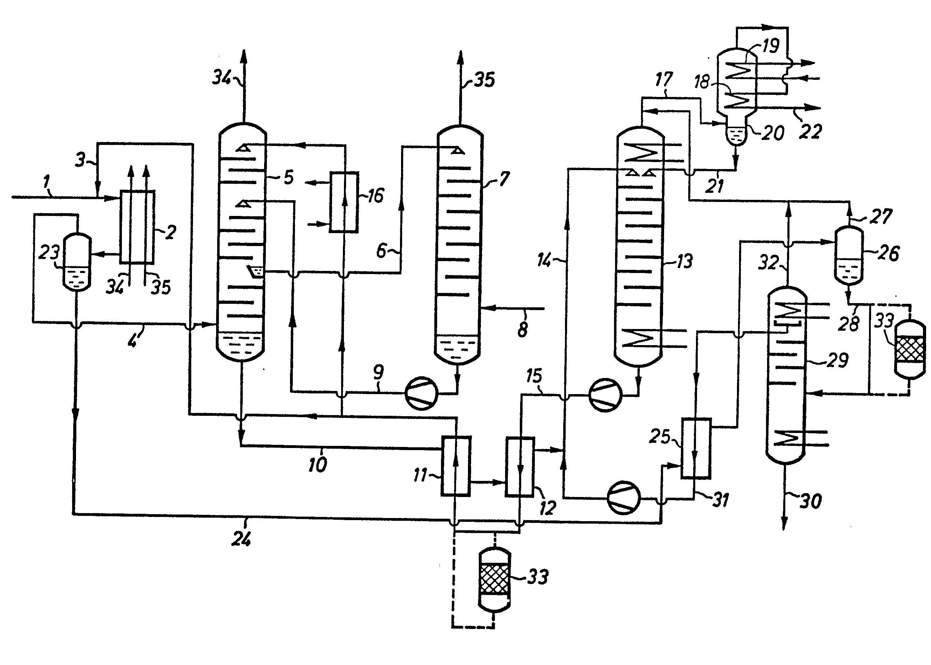

## Patentansprüche

1. Verfahren zum Regulieren des $NH_3$-Gehaltes in dem bei einem Regenerativverfahren zum Auswaschen saurer Gase aus Gasgemischen und/oder zur Verhinderung der Eisbildung vor der Wäsche verwendeten Methanol, das nach diesen Verfahrensschritten jeweils von Wasser bzw. von den im Methanol gelösten Gasbestandteilen befreit und im Kreislauf wieder zur Verhinderung der Eisbildung bzw. als Waschflüssigkeit eingesezt wird, dadurch gekennzeichnet, dass das Methanol zur Entfernung von Ammoniak über einen Ionentauscher geleitet wird.

2. Verfahren nach Anspruch 1, dadurch gekennzeichnet, dass nur ein Teil des insgesamt umlaufenden Methanols über den Ionentauscher geleitet wird.

3. Verfahren nach Anspruch 1 oder 2, dadurch gekennzeichnet, dass die Entfernung des Ammoniaks nach der Abtrennung der weiteren gelösten Gasbestandteile erfolgt.

4. Verfahren nach Anspruch 3, dadurch gekennzeichnet, dass die Entfernung des Ammoniaks nach der $CO_2$-Abtrennung erfolgt.

5. Verfahren nach einem der Ansprüche 1 und 2, dadurch gekennzeichnet, dass die Entfernung des Ammoniaks vor der Abtrennung des Wassers vom Methanol erfolgt.

6. Verfahren nach einem der Ansprüche 1 bis 5, dadurch gekennzeichnet, dass die Entfernung des Ammoniaks bei Temperaturen im Bereich von 10 bis 50 °C, bevorzugt im Bereich von 20 bis 40 °C erfolgt.

7. Verfahren nach einem der Ansprüche 1 bis 6, dadurch gekennzeichnet, dass der Ammoniak im umlaufenden Methanol des Waschkreislaufs bis auf einen Restgehalt von 300 bis 2000 Gew.-ppm., vorzugsweise 300 bis 500 Gew.-ppm., entfernt wird.

8. Verfahren nach einem der Ansprüche 1 bis 7, dadurch gekennzeichnet, dass als Ionentauscher ein Harz vom Acrylsäuretyp verwendet wird.

9. Verfahren nach Anspruch 8, dadurch gekennzeichnet, dass der Ionentauscher mit Schwefelsäure regeneriert wird.

10. Vorrichtung zur Durchführung des Verfahrens nach Anspruch 1 mit einem Vorkühler (2), einer Methanolwaschsäule (5) und mindestens einer Methanolregeneriersäule (7, 13), gekennzeichnet durch einen Ionentauscher (33) zur Entfernung des Ammoniaks und mindestens einem Wärmetauscher (11, 12) zur Anwärmung mindestens des durch den Ionentauscher (33) zu leitenden Methanols, der das Methanol auf Temperaturen von 10 bis 50 °C, vorzugsweise 20 bis 40 °C erwärmt.

11. Vorrichtung nach Anspruch 10 mit einer Methanol-Wasser-Trennsäule (29) zwischen dem Vorkühler (2) und dahinter angeordneten Abscheidern (23 und 26) für Methanol-Wasser-Gemisch, dadurch gekennzeichnet, dass in dem Strömungsweg des regenerierten Methanols nach dem Wärmeaustauscher (12) und vor dem Wärmeaustauscher (11) oder in einem Bypass dazu ein Ionentauscher (33) angeordnet ist.

12. Vorrichtung nach Anspruch 10 mit einer Methanol-Wasser-Trennsäule (29) zwischen dem Vorkühler (2) und dahinter angeordneten Abscheidern (23 und 26) für Methanol-Wasser-Gemisch, dadurch gekennzeichnet, dass in dem Strömungsweg des vom Wasser zu befreienden Methanols nach dem Abscheider (26) und vor der Methanol-Wasser-Trennsäule (29) ein Ionentauscher (33) angeordnet ist.

## Revendications

1. Procédé pour régler la teneur en $NH_3$ du méthanol utilisé dans un procédé de régénération pour éliminer, par lavage, des gaz acides contenus dans des mélanges gazeux, et/ou pour empêcher la formation de glace avant le levage, ce méthanol étant, après ces étapes opératoires, purifié respectivement de l'eau et des constituants gazeux dissous dans le méthanol, et étant réutilisé dans le cycle respectivement pour empêcher la formation de glace et/ou en tant que milieu de lavage, caractérisé en ce qu'en vue de l'élimination de l'ammoniac, on fait passer le méthanol sur un échangeur d'ions.

2. Procédé selon la revendication 1, caractérisé en ce qu'une partie seulement de la totalité du méthanol en circulation est conduite sur ledit échangeur d'ions.

3. Procédé selon la revendication 1 ou 2, caracatérisé en ce que l'élimination de l'ammoniak est effectuée après séparation des autres constituants gazeux dissous.

4. Procédé selon la revendication 3, caractérisé en ce que l'élimination de l'ammoniac est effectuée après séparation du $CO_2$.

5. Procédé selon la revendication 1 ou 2, caractérisé en ce que l'élimination de l'ammoniac est effectuée avant que l'eau ne soit séparée du méthanol.

6. Procédé selon une des revendications 1 à 5, caractérisé en ce que l'élimination de l'ammoniac est effectuée à des températures de 10 à 50 °C, de préférence à des températures de 20 à 40 °C.

7. Procédé selon une des revendications 1 à 6, caractérisé en ce qu'on élimine l'ammoniac contenu dans le méthanol circulant dans le circuit de lavage jusqu'à concurrence d'une quantité résiduaire de 300 à 2000 ppm. en poids, de préférence de 300 à 500 ppm en poids.

8. Procédé selon une des revendications 1 à 7, caractérisé en ce qu'on utilise, en tant qu'échangeur d'ions, une résine du type acide acrylique.

9. Procédé selon la revendication 8, caractérise en ce que l'échangeur d'ions est régénéré à l'aide d'acide sulfurique.

10. Dispositif pour la mise en oeuvre du procédé selon la revendication 1, comportant un prérefroidisseur (2), une colonne de lavage au méthanol(5) et au moins une colonne de régénération du méthanol(7, 13), caractérisé en ce qu'il comprend un échangeur d'ions (33) pour éliminer l'ammoniac et au moins un échangeur de chaleur (11, 12) pour réchauffer au moins le méthanol appelé à être conduit sur l'échangeur d'ions (33), ledit échangeur étant susceptible de réchauffer le méthanol à une température de 10 à 50 °C, de préférence de 20 à 40 °C.

11. Dispositif selon la revendication 10, comportant une colonne de séparation de méthanol et d'eau (29) entre le prérefroidisseur (2) et des séparateurs (23 et 26) disposés en aval pour le mélange de méthanol et d'eau, caractérisé en ce qu'un échangeur d'ions (33) est disposé sur le trajet d'écoulement du méthanol régénéré, en aval de l'échangeur de chaleur (12) et en amont de l'échangeur de chaleur (11), ou dans un conduit de dérivation de ceux-ci.

12. Dispositif selon la revendication 10, comportant une colonne de séparation de méthanol et d'eau (29) disposé entre le prérefroidisseur (12) et des séparateurs du mélange de méthanol et d'eau (23 et 26) disposés en aval, caractérisé en ce qu'un échangeur d'ions (33) est disposé sur le trajet d'écoulement du méthanol dont l'eau doit être retirée, en aval du séparateur (26) et en amont de la colonne de seéparation de méthanol et d'eau (29).

## Claims

1. A process for regulating the $NH_3$-content in methanol used in a regenerative process for washing acid gases from gas mixtures, and/or for preventing ice formation prior to the washing step, which methanol is freed from water or gas constituents dissolved therein after these process steps and is reused in the cycle in order to prevent ice formation, or as a washing liquid, as the case may be, characterised in that, in order to remove ammonia, the methanol is passed over an ion exchanger.

2. A process according to Claim 1, characterised in that only a part of the total circulating methanol is passed over the ion exchanger.

3. A process according to Claim 1 or Claim 2, characterised in that the removal of the ammonia is effected after the separation of the further dissolved gas constituents.

4. A process according to Claim 3, characterised in that the removal of the ammonia is carried out after the $CO_2$-separation.

5. A process according to one of Claims 1 and 2, characterised in that the removal of the ammonia is carried out before the separation of the water from the methanol.

6. A process according to one of Claims 1 to 5, characterised in that the removal of the ammonia is effected at temperatures in the range of 10 to 50 °C, preferably in the range of 20 to 40 °C.

7. A process according to one of Claims 1 to 6, characterised in that the ammonia in the circulating methanol of the washing cycle is removed until a residual content of 300 to 2000 ppm by weight, preferably 300 to 500 ppm by weight, is obtained.

8. A process according to one of Claims 1 to 7, characterised in that an acrylic acid type resin is used as ion exchanger.

9. A process according to Claim 8, characterised in that the ion exchanger is regenerated with sulphuric acid.

10. Apparatus for carrying out the process according to Claim 1 comprising a pre-cooler (2), a methanol washing column (5), and at least one methanol-regenerating column (7, 13) characterised by an ion exchanger (33) for removing the ammonia and at least one heat exchanger (11, 12) which serves to heat at least the methanol to be passed through the ion exchanger (33) and which heats the methanol to temperatures of 10 to 50 °C, preferably of 20 to 40 °C.

11. Apparatus according to Claim 10 having a methanol-water separating column (29) between the precooler (2) and separators (23 and 26) for the methanol-water mixture arranged after it, characterised in that an ion exchanger (33) is arranged in the flow path of the regenerated methanol after the heat exchanger (12) and before the heat exchanger (11), or in a bypass thereto.

12. Apparatus according to Claim 10 having a methanolwater separating column (29) between the pre-cooler (2) and separators (23 and 26) for methanol-water mixture arranged after it, characterised in that an ion exchanger (33) is arranged in the flow path of the methanol which is to be freed from the water, after the separator (26) and before the methanol-water separating column (29).

1/1